# EUROPÄISCHE PATENTSCHRIFT

(11) **EP 2 616 714 B1**
(45) Veröffentlichungstag und Bekanntmachung des Hinweises auf die Patenterteilung: **10.02.2016**
(21) Anmeldenummer: 11755013.7
(22) Anmeldetag: 06.09.2011
(51) Int. Cl.: F16H 57/08

(54) **DEMONTAGE EINES GETRIEBES EINER WINDENERGIEANLAGE**
DISMANTLING A GEAR MECHANISM OF A WIND POWER PLANT
DÉMONTAGE D'UNE TRANSMISSION D'UNE INSTALLATION D'ÉOLIENNE

(30) Priorität: 13.09.2010 DE 102010040654
(43) Veröffentlichungstag der Anmeldung: 24.07.2013
(73) Patentinhaber: Senvion GmbH, 22297 Hamburg (DE)
(72) Erfinder: FRANKE, Jan-Bernd, 25336 Elmshorn (DE); ARNDT, Marco, 63128 Dietzenbach (DE)
(74) Vertreter: Seemann, Ralph
(86) Internationale Anmeldenummer: PCT/EP2011/004474
(87) Internationale Veröffentlichungsnummer: WO 2012/034660

(56) Entgegenhaltungen:
- EP-A1- 1 677 032
- FR-A- 553 430
- JP-U- 57 058 163
- US-A- 440 717

## Beschreibung

Die Erfindung betrifft ein Verfahren zum Demontieren eines mehrstufigen Getriebes einer Windenergieanlage, wobei das Getriebe in einer auf einem Turm einer Windenergieanlage angeordneten Gondel angeordnet ist, wobei das Getriebe wenigstens eine Planetenstufe aufweist, wobei die wenigstens eine Planetenstufe einen Planetenradträger und mehrere im Planetenradträger unter Verwendung von Planetenbolzen gehaltenen Planetenrädern aufweist und wobei die Planetenräder mit einem die Planetenräder umgebenden Hohlrad der Planetenstufe in Wirkverbindung sind.

Windenergieanlagen der Patentanmelderin sind unter der Bezeichnung 5M, MM92, MM82, MM70 sowie MD77 bekannt. Die Windenergieanlagen können sowohl auf dem Land (onshore) oder in Gewässern (offshore) errichtet werden.

Bei Windenergieanlagen sind die Rotoren der Windenergieanlage über einen Triebstrang mit einem Getriebe und einem Generator verbunden. Hierbei weist die Windenergieanlage in der Regel eine Rotorwelle auf, an deren einem Ende die Rotorwelle mit dem Rotor und an ihrem anderen Ende mit dem Getriebe gekoppelt ist. Die Rotorblätter der Windenergieanlage sind an einer Rotornabe befestigt, die ihrerseits wiederum mit der Rotorwelle verbunden ist. Die Drehbewegung des Rotors wird über die Rotorwelle auf das Getriebe übertragen, so dass das Getriebe über einen generatorseitigen Abtrieb mit einem Generator in Wirkverbindung ist.

Bei gattungsgemäßen Windenergieanlagen kann das Getriebe mehrstufig ausgebildet sein, wobei das Getriebe in der Regel eine oder mehrere Planetenstufen sowie ggfs. eine oder weitere Getriebestufen (Stirnradstufen) aufweist.

Häufig ist die erste Getriebestufe eines mehrstufigen Getriebes bei gattungsgemäßen Windenergieanlagen als Planetenstufe ausgebildet, wobei der Rotor mit dem Planetenradträger oder dem Hohlrad der Planetenstufe gekoppelt ist. Hierbei besteht die Planetenstufe im Allgemeinen aus einem Sonnenrad, um das mehrere, mit dem Sonnenrad kämmende Planetenräder angeordnet sind, wobei die Planetenräder in einem Planetenradträger gelagert sind. Das Sonnenrad, die Planetenräder und Teile des Planetenradträgers sind von einem Hohlrad umgeben, wobei das Hohlrad so ausgebildet ist, dass es mit den Planetenrädern kämmt. Entsprechend der Getriebeübersetzungsrichtung wird entweder das Sonnenrad oder der Planetenradträger bzw. das Hohlrad angetrieben.

Beispielsweise sind in DE-B-103 57 026 sowie DE-B-103 34 448 Windenergieanlagen mit mehrstufigen Getrieben beschrieben.

Weitere Getriebe mit wenigstens einer Planetenstufe sind in JP-U-57 058163, US-A-440 171 und FR-A-553 430 beschrieben.

Außerdem ist in der gattungsgemäßen EP-A-1 677 032 ein Verfahren zum Austausch von Komponenten eines Umlaufrädergetriebes, das insbesondere in einer Windkraftanlage eingesetzt ist, offenbart.

Ausgehend von diesem Stand der Technik besteht die Aufgabe der Erfindung darin, bei einer errichteten Windenergieanlage, insbesondere Offshore-Windenergieanlage, Wartungsmaßnahmen, vorzugsweise in einer Gondel, an einem mehrstufigen Getriebe auf einfache Weise durchzuführen.

Gelöst wird diese Aufgabe durch ein Verfahren zum Demontieren eines mehrstufigen Getriebes einer Windenergieanlage, wobei das Getriebe in einer auf einem Turm einer Windenergieanlage angeordneten Gondel angeordnet ist, wobei das Getriebe wenigstens eine Planetenstufe aufweist, wobei die wenigstens eine Planetenstufe einen Planetenradträger und mehrere im Planetenradträger unter Verwendung von Planetenbolzen gehaltenen Planetenrädern aufweist und wobei die Planetenräder mit einem die Planetenräder umgebenden Hohlrad der Planetenstufe in Wirkverbindung sind, wobei folgende Verfahrensschritte ausgeführt werden:
- das Hohlrad und die Planetenräder werden entlang einer im Wesentlichen horizontalen Achse voneinander axial beabstandet, so dass der Wirkeingriff zwischen den Planetenrädern und dem Hohlrad gelöst ist oder wird, wobei insbesondere ein oder mehrere im Planetenradträger gehaltene Planetenräder von außen zugänglich sind,

- die Halteverbindung zwischen einem Planetenrad und dem Planetenradträger, vorzugsweise vor oder nach dem axialen Beabstanden von Hohlrad und den Planetenrädern, wird gelöst,
- der jeweilige Planetenbolzen wird vor der Entnahme des Planetenrads aus seiner Klemmposition in einer Klemmeinrichtung, vorzugsweise aus der Halteposition in einer Bolzenaufnahme des Planetenradträgers, gelöst,
- und das aus der Halteverbindung mit dem Planetenradträger gelöste Planetenrad wird in radialer Richtung zur Getriebelängsachse nach außen entnommen.

Die Erfindung beruht auf dem Gedanken, dass bei einem mehrstufigen Getriebe einer Windenergieanlage mit wenigstens einer Planetenstufe der Planetenradträger mit den Planetenrädern und das die Planetenräder umgebende Hohlrad voneinander und somit die Planetenräder des Planetenradträgers und das Hohlrad in längsaxial verlaufender Richtung und parallel zur Rotationsachse des Rotors oder einer Rotationsachse eines Sonnenrads des Getriebes beabstandet werden. Hierdurch wird der kämmende Wirkeingriff zwischen den Planetenrädern und dem Hohlrad, das Teil des die Planetenräder umgebenden Gehäuses des Getriebes ist, gelöst, wobei die axiale Beabstandung des Planetenradträgers und des Hohlrades auf einem Turm in einer Gondel einer Windenergieanlage ausgeführt wird. Die axiale Beabstandung erfolgt entlang einer im Wesentlichen horizontalen Achse, wobei im Wesentlichen horizontal bedeutet, dass die Achse bzw. Rotationsachse des Rotors zwischen 2° und 15°, vorzugsweise zwischen 3° und 8° zur Horizontalen geneigt ist (sogenannter Tilt-Winkel des Rotors). Hierbei werden aufgrund der beengten räumlichen Verhältnisse in einer geschlossenen Gondel der Planetenradträger und das Hohlrad um mindestens eine Verzahnungsbreite des Planetenrads der Planetenstufe, beispielsweise durch axiales Verschieben, voneinander beabstandet, wobei bei der axialen Verschiebung entlang der Rotationsachse des Sonnenrads des Getriebes ein Bauteil, z.B. der Planetenradträger oder das Hohlrad jeweils in seiner ortsfesten Betriebsposition verbleibt, während das zweite Bauteil, z.B. Hohlrad oder Planetenradträger, zum ortsfesten Bauteil axial verschoben wird. Das heißt, dass der Abstand zum Rotor oder zur Turmachse beim ortsfesten Bauteil gegenüber der Betriebsposition nicht verändert wird.

Um ein Planetenrad, das beim axialen Verschieben des geöffneten Gehäuses des Getriebes mit dem Hohlrad beispielsweise um die etwas mehr als einfache Verzahnungsbreite bis zur dreifachen Verzahnungsbreite der Planetenräder der Planetenstufe verschoben wird, zum Austausch freizulegen, kann bei den beengten räumlichen Verhältnissen in einer Gondel anschließend das am Getriebe zugängliche oder freigelegte Planetenrad vom Planetenradträger radial, d.h. quer, insbesondere senkrecht zur Rotationsachse des Sonnenrads, nach außen entnommen oder ausgebaut werden.

Hierzu ist es im Rahmen der Erfindung vorgesehen, dass die Haltekraft eines Pressverbandes zwischen dem Planetenradträger und dem Planetenbolzen, der ein Planetenrad trägt, reduziert wird, so dass nach axialem oder mit radialem Verlagern des Planetenbolzens das Planetenrad entsprechend vom Planetenradträger entnommen wird.

Der Planetenradträger eines mehrstufigen Getriebes stellt im Allgemeinen ein mechanisch hoch beanspruchtes Bauteil eines Getriebes dar. In der Regel ist ein Planetenradträger eines Getriebes mittels eines vorderen Lagers und mittels eines hinteren Lagers im Getriebegehäuse gelagert, wodurch der Planetenradträger sicher im Getriebegehäuse positioniert ist. Ferner sind in radialer Richtung am Planetenradträger bei den verwendeten (üblichen) Getrieben drei oder vier Planetenräder angeordnet.

Da zwischen den am Planetenradträger angeordneten Planetenrädern wenig Raum bleibt, um eine vordere und eine hintere Wange des Planetenradträgers, die die Lager des Planetenradträgers tragen, miteinander zu verbinden, sind oder werden die beiden Wangen auch mittels der das jeweilige Planetenrad tragenden Planetenbolzen miteinander verbunden und versteift. Hierzu sind die Planetenbolzen fest in die in den Wangen ausgebildeten Bolzenaufnahmen des Planetenradträgers eingepresst. Ein Lösen der in die Wangen bzw. den Bolzenaufnahmen eingepressten Planetenbolzen des Planetenradträgers ist nur unter Aufbringung von großen Kräften, beispielsweise durch hydraulische Drückeinrichtungen oder dergleichen, möglich, wobei bei Einwirkung von großen Kräften auf die Planetenbolzen zum Herauslösen die Gefahr besteht, dass die präzise gefertigten Passflächen der Wangen sowie der in den Wangen ausgebildeten Bolzenaufnahmen und Planetenbolzen hierbei beschädigt werden.

Demgegenüber ist gemäß der Erfindung vorgesehen, dass die Haltekraft zwischen dem Planetenradträger bzw. den Wangen des Planetenradträgers und dem Planetenbolzen ohne Einwirkung von hydraulischen Drückeinrichtungen oder dergleichen auf einfache Weise herabgesetzt wird, so dass nach Reduzierung der Haltekraft die Planetenbolzen aus ihrer Lagerung bzw. Halteverbindung aus dem geöffneten Getriebe herausgelöst werden.

Erfindungsgemäß ist vorgesehen, dass der jeweilige Planetenbolzen für ein Planetenrad vor der Entnahme des Planetenrads aus seiner Klemmposition in einer Klemmeinrichtung, vorzugsweise aus der Halteposition in einer Bolzenaufnahme des Planetenträgers, bzw. in den Wangen des Planetenradträgers gelöst wird, wodurch die Halteverbindung zwischen dem Planetenrad und dem Planetenradträger gelöst wird.

Hierzu ist in einer bevorzugten Ausgestaltung des Verfahrens weiter vorgesehen, dass der Planetenbolzen, insbesondere nach Lösen der Klemmposition oder Halteposition in der Bolzenaufnahme, in längsaxialer Richtung oder in queraxialer Richtung bewegt wird. Hierdurch wird der Planetenbolzen entsprechen in seiner Position verlagert, wodurch es danach möglich ist, das Planetenrad aus dem Planetenradträger auszubauen bzw. zu entnehmen.

Vorzugsweise wird die Halteverbindung zwischen dem Planetenrad und dem Planetenradträger dadurch gelöst, dass die Haltekraft der Halteverbindung, durch die ein Pressverband zwischen dem Planetenradträger und dem Planetenbolzen ausgebildet wird oder ist, reduziert wird, und wobei danach der Planetenbolzen zur Entnahme des Planetenrads bewegt wird.

Insbesondere wird bei Bewegung des Planetenbolzens in längsaxialer Richtung der Planetenbolzen relativ zum Planetenrad bewegt, wobei insbesondere in einem weiteren Verfahrensschritt danach das Planetenrad entnommen wird.

Außerdem ist es in einer bevorzugten Ausführungsform des Verfahrens weiterhin vorgesehen, dass vor der Entnahme des Planetenrads der Planetenbolzen unter Verwendung eines im Planetenbolzen ausgebildeten Kanals mit (Druck-)Öl oder mit einem Kühlmedium beaufschlagt wird, so dass durch Beaufschlagung der Kontaktstellen zwischen dem Planetenbolzen und dem Planetenradträger, vorzugsweise im Bereich des Pressverbandes zwischen dem Planetenradträger und dem Planetenbolzen, mit Öl die Klemmstellen des Planetenbolzens gelöst werden oder der Planetenbolzen durch Einbringen des Abkühlmittels in die wenigstens eine Bohrung des Planetenbolzens in seiner Klemmposition durch Abkühlung des Planetenbolzens gelöst wird.

In einer alternativen Ausführungsform ist dazu weiter vorgesehen, dass bei Bewegung des Planetenbolzens in queraxialer Richtung der Planetenbolzen und das Planetenrad gemeinsam entnommen werden, wodurch der Planetenbolzen und das Planetenrad in radialer Richtung nach außen gleichzeitig verlagert werden.

Dazu ist außerdem in einer bevorzugten Ausgestaltung des Verfahrens vorgesehen, dass die Halteverbindung zwischen dem Planetenrad und dem mit einer oder zwei Wangen ausgebildeten Planetenradträger dadurch gelöst wird, dass die Haltekraft der Halteverbindung, die durch eine Bolzenaufnahme in der Wange oder durch Bolzenaufnahmen in beiden Wangen für den Planetenbolzen ausgebildet ist, reduziert wird, wobei die Bolzenaufnahme in der Wange oder die Bolzenaufnahmen in den Wangen durch Lösen der Verbindung von zwei Wangenteilen der oder jeder Wange, insbesondere Wangenaußenteil und Wangeninnenteil, entlang einer in der Wange oder in den Wangen ausgebildeten Teilung geöffnet werden. Vorzugsweise weist dabei das Getriebe mehrteilige Wangen mit teilbaren Bolzenaufnahmen für einen Planetenbolzen eines Planetenrades auf, wobei insbesondere die Wangen jeweils ein Wangeninnenteil und wenigstens ein Wangenaußenteil aufweisen. Für einen Planetenbolzen sind die Bolzenaufnahmen beider Wangen jeweils im Zusammenwirken jeweils eines Wangenaußenteils und eines Wangeninnenteils einer Wange ausgebildet.

Alternativ zu einer Ausführung des Planetenradträgers mit zwei Wangen sieht eine weitere (alternative) Ausführungsform des Planetenradträgers auch eine Teilung der Bolzenaufnahme bei einwangigen Planetenradträgern, d.h. Planetenradträgern mit nur einer Wange für die daran angeordneten Planetenräder, vor, bei denen die Planetenbolzen für die jeweiligen Planetenräder nur einseitig eingespannt sind (sogenannte fliegende Lagerung).

Durch die Beaufschlagung einer Leitung oder von Kanälen im Planetenbolzen, die vorzugsweise parallel zur Längsachse des Planetenbolzens ausgebildet sind, wird durch eine Druckbeaufschlagung mit Öl eine Aufweitung der Bohrungen oder der Bolzenaufnahmen an den Kontaktstellen mit den Wangen erreicht, wodurch der Planetenbolzen axial verschiebbar ist und nach einer axialen Verschiebung die Planetenräder radial nach außen entnommen werden.

Bei einer alternativen Ausführungsform mit einer Kühlmittelleitung oder Kühlkanälen im Planetenbolzen, die ebenfalls parallel zur Längsachse des Planetenbolzens im Bolzen ausgebildet sind, wird durch Einbringen einer kryogenen Flüssigkeit, z.B. flüssiger Stickstoff, als Abkühlmittel, eine kurzzeitige starke Abkühlung des Bolzen erreicht, wodurch aufgrund der Wärmedehnung des Planetenbolzens dieser in seinen geometrischen Abmessungen schrumpft, so dass eine Axialverschiebung des Planetenbolzens ermöglicht wird bzw. ist.

Ferner ist in einer Weiterbildung des Verfahrens vorgesehen, dass bei der axialen Beabstandung des Hohlrades und der Planetenräder voneinander die Planetenräder gegenüber dem, vorzugsweise ortsfesten, Hohlrad bewegt werden oder das Hohlrad gegenüber den im ortsfesten Planetenradträger angeordneten Planetenrädern bewegt wird. Im Rahmen der Erfindung wird dabei unter einem in der Gondel ortsfest angeordneten Bauteil des Getriebes, wie z.B. Hohlrad, Planetenradträger und dergleichen, ein Bauteil verstanden, bei dem während des erfindungsgemäßen Verfahrens in der Betriebsposition der Abstand zum Rotor oder zur Turmachse gegenüber der Betriebsposition im Wesentlichen unverändert bleibt bzw. konstant ist.

Ferner ist ein Getriebe einer Windenergieanlage mit wenigstens einer Planetenstufe vorgesehen, wobei die Planetenstufe wenigstens einen Planetenradträger und mehrere im Planetenradträger unter Verwendung von Planetenbolzen gehaltene Planetenräder aufweist und wobei die Planetenräder mit einem die Planetenräder umgebenden Hohlrad der Planetenstufe in Wirkverbindung sind, wobei der Planetenradträger zwei Wangen aufweist, zwischen denen die Planetenräder mittels des jeweiligen Planetenbolzens gehalten werden oder sind, wobei die Wangen Bolzenaufnahmen für die Planetenbolzen aufweisen, in denen die Planetenbolzen oder die Enden der Planetenbolzen aufgenommen sind oder werden, wobei für einen Planetenbolzen die Bolzenaufnahmen beider Wangen jeweils im Zusammenwirken eines Wangenaußenteils und eines Wangeninnenteils einer Wange ausgebildet ist oder wird.

Dadurch, dass bei einem mehrstufigen Getriebe eine geteilte bzw. teilbare Bolzenaufnahme für einen Planetenbolzen im Planetenradträger vorgesehen ist, wird erreicht, dass die Halteverbindung zwischen einem Planetenrad und dem Planetenradträger in Form des Planetenbolzens bei einem geöffneten Getriebe gelöst wird, wodurch nach Lösen der Halteverbindung das von außen zugängliche Planetenrad in radialer Richtung, d.h. quer sowie senkrecht zur Getriebelängsachse oder zur Rotationsachse des Sonnenrads, nach außen entnommen wird oder ist. Hierdurch ist es möglich, Planetenräder oder Planetenlager in einer Gondel einer bestehenden Windenergieanlage auf einfache Weise auszutauschen, ohne dass das komplette Getriebe auf aufwändige Weise aus der Gondel herausgehoben oder ausgetauscht werden muss.

Durch das Öffnen der mehrteiligen Bolzenaufnahme oder Bolzenaufnahmen wird die Haltekraft zwischen dem Planetenradträger und den Planetenbolzen gelöst, wobei nach Entfernen der gelösten Wangenaußenteile der Planetenbolzen freigelegt wird, wodurch das Planetenrad und der Planetenbolzen gemeinsam nach außen verlagerbar sind.

Dazu ist in einer Weiterführung des Getriebes vorgesehen, dass das Wangenaußenteil mit dem Wangeninnenteil einer Wange unter Verwendung von Spannelementen, vorzugsweise Spannbolzen, verspannbar oder verbindbar ist. Hierdurch ist die mehrteilige Wange, bestehend aus wenigstens einem Wangeninnenteil und wenigstens einem Wangenaußenteil unter Verwendung von Spannelementen bzw. Schrauben miteinander verbindbar, wobei die Schraubverbindung oder die Spannverbindung für die Entnahme eines Planetenrads bzw. eines Planetenbolzens gelöst sind.

Weiterhin zeichnet sich eine bevorzugte Ausführungsform des Getriebes dadurch aus, dass das Wangenaußenteil und das Wangeninnenteil einer Wange halbkreisförmige Mulden zur Ausbildung einer kreisförmigen Bolzenaufnahme aufweisen, die bei Anordnung eines Planetenbolzens in der Bolzenaufnahme die Mulde des Wangenaußenteils und des Wangeninnenteils in geschlossenem Zustand der Wangen den Planetenbolzen formkomplementär umgeben.

Ferner weist vorzugsweise das Wangenaußenteil Löcher zur Aufnahme von Spannelementen, insbesondere Spannbolzen, auf, wobei insbesondere die Löcher mehrreihig, vorzugsweise doppelreihig, nebeneinander entlang der teilkreisförmigen Außenseite des Wangenaußenteils angeordnet sind.

Dazu ist in einer Ausführungsform ferner vorgesehen, dass beim Verspannen des Wangenaußenteils mit dem Wangeninnenteil einer Wange die Länge der Spannelemente, insbesondere der Spannschrauben, mit zunehmendem Abstand zur Planetenbolzenachse abnimmt.

Darüber hinaus zeichnet sich eine Ausführungsform des Getriebes dadurch aus, dass die zur Verbindung des Wangenaußenteils mit dem Wangeninnenteil verwendeten Schrauben oder Spannelemente wenigstens teilweise als Dehnbolzen ausgebildet sind, wobei insbesondere die der Planetenbolzenachse naheliegenden Schrauben oder Spannelemente als Dehnbolzen ausgebildet sind. Hierdurch wird eine zuverlässige Verbindung zwischen dem Wangenaußenteil und dem Wangeninnenteil erreicht, so dass bei Anordnung eines Planetenbolzens in einer Bolzenaufnahme und Verspannen des Wangenaußenteils mit dem Wangeninnenteil der Planetenbolzen zuverlässig im Dauerbetrieb des Getriebes gehalten wird bzw. fixiert ist.

Bei einer Verwendung eines, vorzugsweise mehrstufigen, Getriebes in einer auf einem Turm einer Windenergieanlage angeordneten Gondel ist das Getriebe wie voranstehend ausgebildet.

Typischerweise beträgt bei bekannten (Offshore-)Windenergieanlagen der Patentanmelderin mit Leistungen von 5 MW bis 6 MW die Verzahnungsbreite der Planetenräder in der Planetenstufe des Getriebes bzw. der ersten Getriebestufe etwa zwischen 500 mm bis 750 mm. Aufgrund der räumlichen Verhältnisse in einem Maschinenhaus oder einer Gondel einer derartigen Anlage ist lediglich eine axiale Verschiebung von Getriebeteilen bzw. von Bauteilen eines Getriebes aufgrund der beengten Anordnung der Anlage in der Gondel zwischen 0,5 m bis 1,5 m möglich. Somit verbleibt für eine Wartungsperson wenig baulicher Raum zwischen den Bauteilen, wenn ein mehrstufiges Getriebe geöffnet wird und beispielsweise ein Hohlrad in axialer Richtung verschoben wird.

Dazu ist vorgesehen, dass beispielsweise vor dem längsaxialen Verschieben eines Hohlrades eines Getriebes entsprechende Stützeinrichtungen und dergleichen verwendet werden, um das Hohlrad oder Planetenräder beispielsweise gegen Herausfallen zu sichern, bevor das Hohlrad verschoben wird. Bevorzugterweise kann der Ausbau eines Planetenrades einer ersten Planetenstufe oder der zweiten, d.h. rotorabseitigen, Planetenstufe durchgeführt werden, wobei hierbei das Getriebe zwischen der zweiten Planetenstufe und der rotorabseitigen Stirnradstufe getrennt wird. Je nach baulichen Verhältnissen ist dabei der Planetenradträger der zweiten Planetenstufe entsprechend unter Verwendung von Stützeinrichtungen oder dergleichen abzustützen.

Im Rahmen der Erfindung ist vorgesehen, dass das oben beschriebene Verfahren zum Demontieren eines Getriebes einer Windenergieanlage unter Verwendung eines voranstehend beschriebenen Getriebes, das mehrteilige Wangen mit teilbaren Bolzenaufnahmen für einen Planetenbolzen eines Planetenrades aufweist, durchgeführt wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen exemplarisch beschrieben, wobei bezüglich aller im Text nicht näher erläuterten erfindungsgemäßen Einzelheiten ausdrücklich auf die schematischen Zeichnungen verwiesen wird. Es zeigen:
- Fig. 1: eine schematische Darstellung einer Windenergieanlage;
- Fig. 2: eine schematische Querschnittsansicht einer Gondel einer Windenergieanlage;
- Fig. 3: schematisch eine Ansicht eines mehrstufigen Getriebes einer Windenergieanlage;
- Fig. 4: schematisch einen Querschnitt durch das mehrstufige Getriebe (vgl. Fig. 3);
- Fig. 5: schematisch einen Planetenradträger einer Planetenstufe eines Getriebes gemäß dem Stand der Technik;
- Fig. 6: schematisch einen Planetenradträger mit teilbaren Bolzenaufnahmen für Planetenbolzen;
- Fig. 7: schematisch eine perspektivische Ansicht eines geöffneten bzw. eines demontierten Getriebes einer Windenergieanlage;
- Fig. 8: eine perspektivische Ansicht eines an der ersten Planetenstufe getrennten, mehrstufigen Getriebes einer Windenergieanlage in einer schematischen Ansicht;
- Fig. 9a, 9b: schematisch jeweils einen Querschnitt durch einen Planetenbolzen und eine Draufsicht auf einen Planetenbolzen für ein Planetenrad und
- Fig. 10: eine perspektivische Ansicht eines an der ersten Planetenstufe getrennten, mehrstufigen Getriebes einer Windenergieanlage in einer schematischen Darstellung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

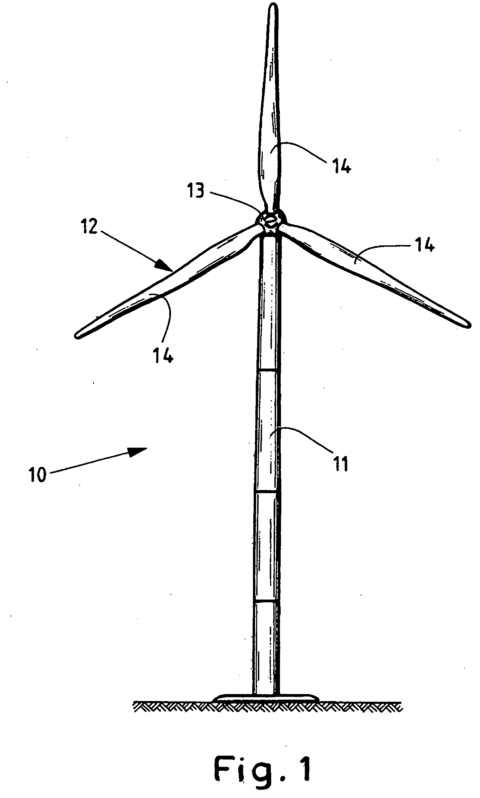

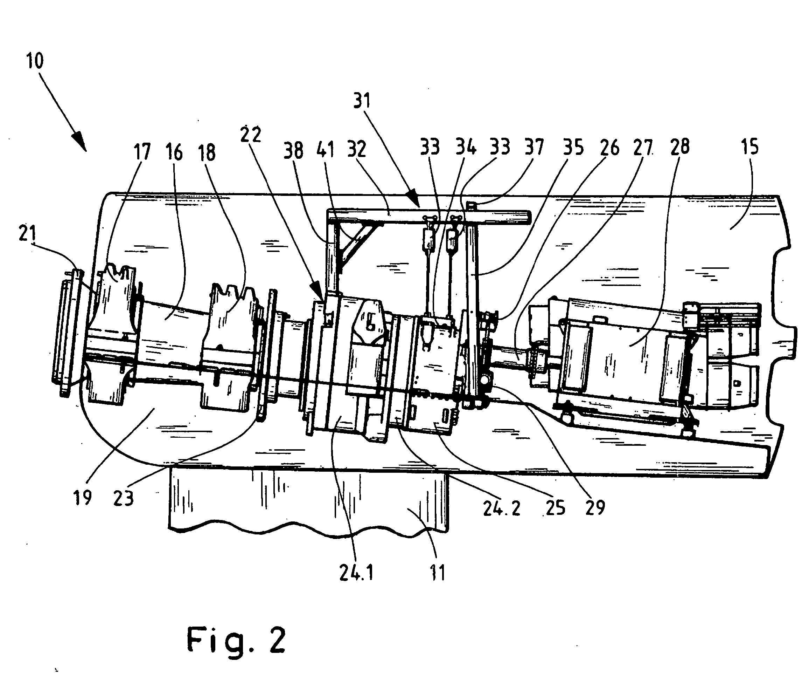

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht sich der Rotor 12 in an sich bekannter Weise. Hierdurch kann Leistung von einem an den Rotor 12 bzw. an die Rotornabe 13 angeschlossenen Generator in einem auf dem Turm 11 und hinter dem Rotor 12 angeordneten Maschinenhaus (vgl. Fig. 2) erzeugt werden und in ein Verbrauchernetz abgegeben werden.

Fig. 2 zeigt schematisch eine Querschnittsansicht eines auf dem Turm 11 angeordneten Maschinenhauses 15 bzw. einer Gondel der Windenergieanlage 10. Im rotorseitigen Bereich des Maschinenhauses 15 ist eine Rotorwelle 16 in zwei Lagerböcken 17, 18 auf einem leicht geneigten Maschinenrahmen 19 gelagert. Die Rotorwelle 16 ragt zur Rotorseite aus dem Maschinenhaus 15 hinaus und weist auf der Außenseite einen Rotorflansch 21 auf, an dem der Rotor 12 bzw. die Rotornabe 13 eines Rotors befestigt ist (vgl. Fig. 1).

Die dem Rotor 12 abgewandte Seite der Rotorwelle 16 ist im Maschinenhaus 15 mit einem mehrstufigen Getriebe 22 verbunden, wobei zwischen dem Lagerbock 18 und der Eingangsseite des Getriebes 22 eine Arretiervorrichtung 23 vorgesehen ist, so dass sich der Rotor 12 während des Stillstands zu Wartungsarbeiten an der Windenergieanlage 10 arretieren lässt bzw. arretiert wird.

Das mehrstufige Getriebe 22 besteht aus zwei hintereinander angeordneten Planetenstufen 24.1, 24.2, die in mechanischer Wirkverbindung miteinander sind. Darüber hinaus steht die zweite Planetengetriebestufe 24.2 mit einer hinteren Stirnradstufe 25 des Getriebes 22 in Wirkverbindung.

Durch das mehrstufige Getriebe 22 wird die niedrige Drehzahl der Rotorwelle 16 über mehrere Stufen in eine hohe Drehzahl einer Abtriebswelle umgewandelt, die über eine Kupplung 27 einen Generator 28 antreibt. Im Rahmen der Erfindung ist es möglich, dass das mehrstufige Getriebe 22 auch eine Planetenstufe und zwei Stirnradstufen oder beliebige andere Kombinationen von Stufen aufweisen kann.

Auf der generatorseitigen bzw. rotorabgewandten Seite einer Abtriebswelle der Stirnradstufe 25 ist eine Rotorbremse 26 sowie die Kupplung bzw. Generatorkupplung 27 angeordnet. Die Kupplung 27 ist dabei mit der Generatorwelle verbunden. Unterhalb der Rotorbremse 26 ist in Verlängerung der Rotorwellenachse eine Schleifringeinheit 29 für die Blattverstellung der Rotorblätter 14 (Fig. 1) angeordnet. Die Schleifringeinheit 29 bildet zusammen mit einem durch das Getriebe 22 bis in die Rotorwelle 26 verlaufenden Kabelrohr die Energieversorgungseinrichtung für die Rotornabe 13 (Fig. 1).

Oberhalb des Getriebes 22 ist eine als Rahmengestell ausgebildete Hebeeinrichtung 31 angeordnet, die sich an ihrem rotorseitigen Ende auf dem Getriebe 22 bzw. auf der ersten Planetenstufe 24.1 abstützt. Am generatorseitigen Ende ist die Hebeeinrichtung 31 seitlich neben der Stirnradstufe 25 auf dem Grundrahmen bzw. auf dem Maschinenrahmen 19 befestigt.

Die Hebeeinrichtung 31 weist zwei senkrecht zur Darstellungsebene in Fig. 2 entlang der Längserstreckung des Maschinengehäuses 15 nebeneinander liegende bzw. verlaufende Traversen 32 auf, auf denen je zwei schematisch eingezeichnete Kettenzüge als Hebemittel bewegbar, vorzugsweise horizontal verfahrbar, angeordnet sind. Die vier Kettenzüge, jeweils zwei Kettenzüge 33 pro Traverse 32, sind über eine Befestigungsplatte 34 mit dem Oberteil der Stirnradstufe 25 verbunden.

Die Hebeeinrichtung 31 ist aus mehreren Einzelteilen bzw. Stahlträgern zusammengesetzt, die auf manuelle Weise oder mittels eines, vorzugsweise fest installierten, Bordkrans der Windenergieanlage 10 handhabbar sind und in Einzelteilen in das Maschinenhaus 15 aufholbar sind. Dies bedeutet, dass sowohl das Gewicht der Einzelteile bzw. der Träger als auch deren Abmessungen starken Begrenzungen unterliegen.

Die Hebeeinrichtung 31 weist zwei seitlich an der Stirnradstufe 25 auf dem Maschinenrahmen 19 senkrecht angeordnete Stützen, von denen nur die vordere Stütze 35 sichtbar ist, auf, die bei Errichtung der Hebevorrichtung 31 zuerst einzeln aufgestellt werden und mit einem horizontalen Querträger 37 am oberen Ende miteinander verbunden werden, so dass die seitlichen Stützen in Verbindung mit dem Querträger 37 nach Art eines umgedrehten "U" ausgebildet sind. Anschließend werden die horizontalen Traversen 32 an der Unterseite des Querträgers 37 angeordnet, wobei die rotorseitigen Enden der Traversen 32 über senkrecht angeordnete Stützen 38 auf der ersten Getriebestufe 24.1 abgestützt werden.

Zur Versteifung der Verbindungen der seitlichen Stützen mit dem Querträger 37 sind in den Eckbereichen entsprechende Diagonal-Querstreben vorgesehen. Darüber hinaus sind auch zur mechanischen Stabilisierung der Traversen 32 im Eckbereich zu den rotorseitigen Stützen 38 Diagonal-Längsstreben vorgesehen.

Die unteren Fußteile der Stützen 35, 38 sind am unteren Ende mit einer Neigung ausgebildet, die der Neigung des Maschinenrahmens 19 im Maschinenhaus 15 entspricht, so dass bei senkrechter Anordnung der Stützen 35, 36, 39 die Traversen 32 und der Querträger 37 waagerecht angeordnet sind.

Zur Demontage der hinteren Stirnradstufe 25 mit der zweiten Planetenstufe 24.2 von der benachbarten ersten Planetenstufe 24.1 wird die Kupplung 27 zwischen dem Getriebe 22 und dem Generator 28 entfernt. Darüber hinaus werden die Pitchdurchführung sowie die Energieversorgungseinrichtung für die Rotornabe vor der Demontage des Getriebes 22, vorzugsweise vollständig, demontiert werden. Hierzu ist aus Platzgründen das Kabelrohr, das durch das Getriebe 22 bis in die Rotorwelle 16 verläuft, mehrteilig ausgeführt.

Anschließend wird die Befestigungsplatte 34 auf der Stirnradstufe 25 montiert, so dass nach Lösen der Verbindung zwischen der ersten Planetenstufe 24.1 und der zweiten Planetenstufe 24.2 die Stirnradstufe 25 mit der zweiten Planetenstufe 24.2 axial verschoben wird und danach die Stirnradstufe 25 ggf. mit Abstandshaltern fixiert wird. Danach werden durch den entstandenen axialen Spalt zwischen der ersten Planetenstufe 24.1 und der zweiten Planetenstufe 24.2 entsprechende Bauteile bzw. Planetenräder der ersten Planetenstufe 24.1 radial nach außen entnommen.

Anschließend erfolgt beispielsweise der Austausch eines Planetenrads eines Planetenradträgers an der ersten Planetenstufe 24.1, wobei nach erfolgtem Austausch des Planetenrads der Rückbau in umgekehrter Reihenfolge der Verfahrensschritte erfolgt.

Mittels der Hebeeinrichtung 31 lassen sich einzelne Stufen eines Getriebes bzw. des Getriebes 22 voneinander in axialer Richtung beabstanden, unabhängig davon, ob es sich um ein Getriebe mit einer Planetenstufe und mehreren Stirnradstufen oder mehreren Planetenstufen und einer Stirnradstufe handelt.

Bei der in Fig. 2 dargestellten Ausführungsform eines Getriebes 22 sind zwei Planetenstufen vorgesehen, wobei nach der ersten Planetenstufe 24.1 eine zweite, schmaler bauende zweite Planetenstufe 24.2 vorgesehen ist. Die zweite Planetenstufe 24.2 steht generatorseitig mit einer Stirnradstufe 25 in Verbindung.

Durch die Trennung bzw. axiale Verlagerung der Stirnradstufe 25 zusammen mit der zweiten Planetenstufe 24.2 unter Verwendung der Hebeeinrichtung 31 von der ersten Planetenstufe 24.1 wird der Zugang zu den Planetenrädern der ersten Planetenstufe 24.1 und somit deren Austausch bzw. Reparatur im geschlossenen Maschinenhaus 15 der Windenergieanlage 10 ermöglicht.

Dadurch wird erreicht, dass die Demontage eines mehrstufigen Getriebes sowie die Reparatur des Getriebes auf der Anlage bzw. im Maschinenhaus 15 erfolgen, so dass ein kompletter Austausch des gesamten Getriebes entfällt.

Nach Durchführung der Wartungsarbeiten und/oder Instandsetzungsarbeiten und Montage des zerlegten Getriebes wird die Hebeeinrichtung 31 bevorzugt wieder in ihre handhabbaren Einzelteile zerlegt und ggf. aus dem Maschinenhaus 15 entfernt.

Im Rahmen der Erfindung ist es ebenso möglich, dass unter Verwendung der Hebeeinrichtung 31 die Stirnradstufe 25 und die zweite Planetenstufe 24.2 voneinander getrennt werden können, um Wartungsmaßnahmen an bzw. in der zweiten Planetenstufe 24.2 durchzuführen.

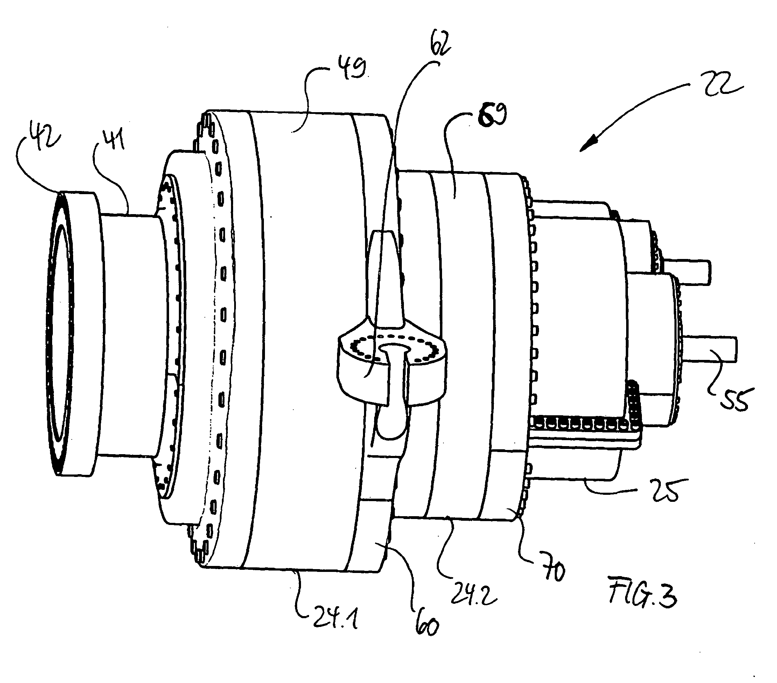

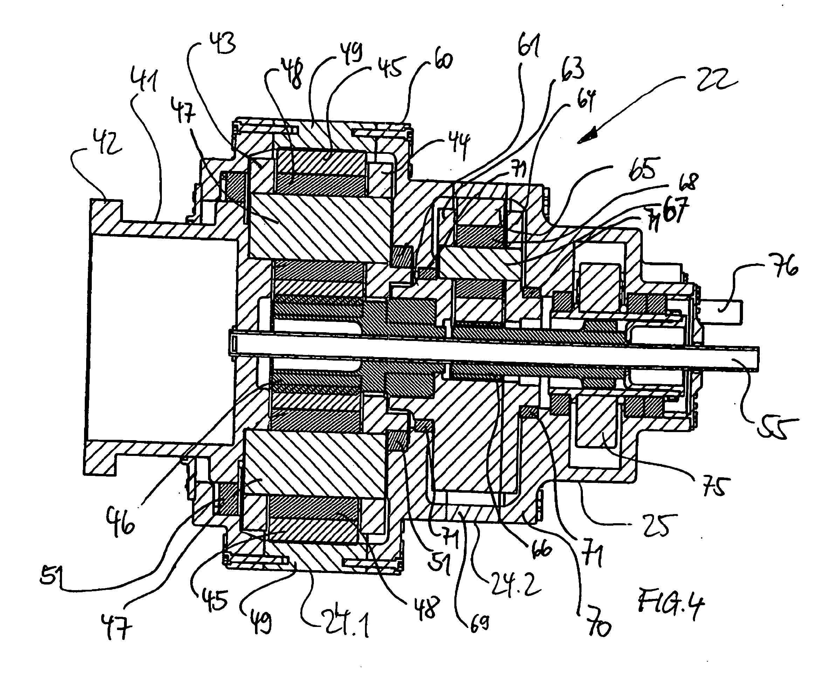

Fig. 3 zeigt schematisch eine perspektivische Ansicht eines mehrstufigen Getriebes 22 mit einer ersten Planetenstufe 24.1 und einer zweiten Planetenstufe 24.2. Ferner verfügt das mehrstufige Getriebe 22 über eine Stirnradstufe 25 als dritte Stufe. In Fig. 4 ist ein Querschnitt durch das in Fig. 3 gezeigte Getriebe schematisch dargestellt.

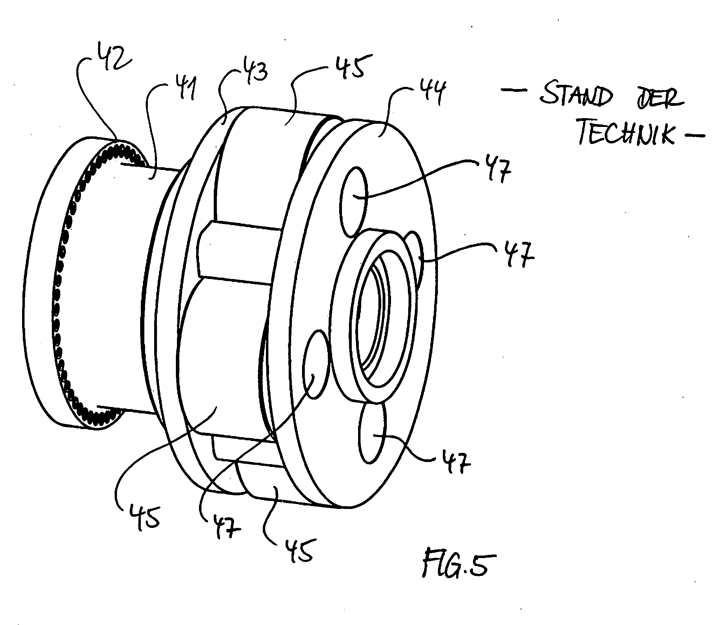

Das Getriebe 22 verfügt rotorseitig über einen Planetenradträger 41, der zur Verbindung mit einer Rotorwelle einen Rotorwellenflansch 42 aufweist. Der Planetenradträger 41 ragt in das Gehäuse des Getriebes 22 hinein und weist im Inneren des Getriebes 22 zwei Wangen 43, 44 auf, die voneinander beanstandet sind. Zwischen den Wangen 43, 44 (vgl. Fig. 4, 5) sind Planetenräder 45 gelagert, die eine äußere Verzahnung aufweisen. Die Planetenräder 45 sind um ein Sonnenrad 46 angeordnet, wobei das Sonnenrad 46 ebenfalls eine Außenverzahnung aufweist, die mit der Außenverzahnung der Planetenräder 45 kämmt.

In Fig. 5 ist schematisch ein Planetenradträger 41 der ersten Planetenstufe 24.1 mit vier Planetenrädern 45 dargestellt, wobei aus Gründen der Darstellbarkeit das hintere Planetenrad nicht sichtbar ist.

Im Allgemeinen weist die Planetenstufe 24.1 vier Planetenräder 45 auf. In einem hier nicht dargestellten Ausführungsbeispiel können auch drei Planetenräder vorgesehen sein, die in Umfangsrichtung jeweils um 120° versetzt um das Sonnenrad 46 angeordnet sind.

In der in Fig. 4 dargestellten Querschnittsdarstellung sind nur zwei Planetenräder 45 sichtbar, wobei die Planetenräder um jeweils 90° versetzt um das Sonnenrad 46 angeordnet sind (vgl. Fig. 5).

Die Planetenräder 45 (vgl. Fig. 4) sind in dem Planetenradträger 41 über jeweils einen Planetenbolzen 47 und einem Planetenlager 48 gelagert, wobei die Planetenbolzen 47 fest im Planetenradträger 41 angeordnet sind. Bei den Planetenlager 48 kann es sich zum Beispiel um Wälzlager oder auch Gleitlager handeln.

Die Planetenstufe 24.1 (vgl. Fig. 4) besteht aus den Komponenten: Sonnenrad 46, Planetenräder 45, dem Planetenradträger 41 und einem Hohlrad 49 (vgl. Fig. 3, 4), das eine Innenverzahnung aufweist, die mit der (Außen-)Verzahnung der Planetenräder 45 kämmt. Das Hohlrad 45 ist Bestandteil des Getriebegehäuses und umgibt die im Inneren des Getriebes 22 angeordneten Planetenräder 45 sowie weitere Komponenten. Hierbei ist das Hohlrad 49 in dem Getriebegehäuse fest angeordnet, wobei das Hohlrad 49 so ausgebildet ist, dass seine Innenverzahnung mit der Außenverzahnung der Planetenräder 46 kämmt.

Darüber hinaus ist der Planetenradträger 41 unter Verwendung von Lagern 51 gehäusefest gelagert.

Bei Drehung des Rotors (vgl. Fig. 1, Bezugszeichen 12) durch die Bewegung des Windes, wird der Planetenradträger 41 über die Rotorwelle (vgl. Fig. 2, Bezugszeichen 16) in eine Drehbewegung versetzt, wobei aufgrund der Lagerung der Planetenbolzen 47 im Planetenradträger 41 die Planetenräder 45 zwischen dem gehäusefesten Hohlrad 49 und dem Sonnenrad 46 abgewälzt werden, wodurch das Sonnenrad 46 ebenfalls in eine Drehbewegung versetzt wird. Von dem zwischen den Planetenrädern 45 zentrierten Sonnenrad 46 wird das erzeugte Drehmoment auf die nächste Stufe bzw. zweite Planetenstufe 24.1 des Getriebes 22 übertragen.

Das Sonnenrad 46 der ersten Planetenstufe 24.1 ist im Wirkeingriff mit einem Planetenradträger 61 der zweiten Planetenstufe 24.2, der zwei voneinander beabstandete Wangen 63, 64 aufweist, zwischen denen Planetenräder 65 in Umfangsrichtung angeordnet sind. Die Planetenräder 65 sind in dem Planetenradträger 61 gelagert, wobei die Außenverzahnung der Planetenräder 65 mit der Außenverzahnung eines im Inneren angeordneten Sonnenrades 66 kämmt. Die drei Planetenräder 65 der zweiten Planetenstufe 24.2 sind um jeweils 120° versetzt um das Sonnenrad 66 angeordnet.

Ferner sind die Planetenräder 65 im Wirkeingriff mit der Innenverzahnung eines die Planetenräder 65 umgebenden Hohlrades 69 der zweiten Getriebestufe 24.2 umgeben. Außerdem sind die Planetenräder 65 im Planetenradträger 61 über entsprechende Planetenbolzen 67 und entsprechende Lager 68 drehbar gelagert, wobei die Planetenbolzen 67 fest im Planetenradträger 61 angeordnet sind. Das Hohlrad 69 ist im Getriebegehäuse fest angeordnet, wobei das Hohlrad 69 so ausgebildet ist, dass es eine Innenverzahnung aufweist, die mit der Außenverzahnung der Planetenräder kämmt. Durch die Drehung der Planetenräder 65 der zweiten Planetenstufe 24.2 wird das Sonnenrad 66 der zweiten Planetenstufe 24.2 in Rotation versetzt, wobei das Sonnenrad 66 in Wirkeingriff mit einem Stirnrad 75 der generatorseitigen Stirnradstufe 25 ist.

Zusätzlich ist im Getriebe 22 zentrisch ein Kabelrohr 55 angeordnet, durch das die elektrischen Leitungen aus dem Inneren der Windenergieanlage zum Rotor geführt werden.

Abtriebsseitig ist das Stirnrad 75 mit einem (hier nicht dargestellten) Ritzel einer generatorseitigen Abtriebswelle 76 gekoppelt.

Wie aus Fig. 3 ferner hervorgeht, ist zwischen dem Hohlrad 49 der ersten Planetenstufe 24.1 und dem Hohlrad 69 der zweiten Planetenstufe 24.2 ein Teilungsflansch 60 angeordnet, der mit dem Hohlrad 49 der ersten Planetenstufe 24.1 und dem Hohlrad 69 der zweiten Planetenstufe 24.2 unter Verwendung von entsprechenden Schrauben verbunden ist. Ferner ist zwischen dem Hohlrad 69 der zweiten Planetenstufe 24.1 und der Stirnradstufe 25 ein weiterer Teilungsflansch 70 ausgebildet.

Aus Fig. 3 ist ferner ersichtlich, dass der Teilungsflansch 60 seitlich über eine Drehmomentstütze 62 verfügt, wobei beidseits des Getriebes 22 jeweils eine Drehmomentstütze vorgesehen ist.

In Fig. 5 ist unter Weglassung der äußeren Bauteile des Getriebes der Planetenradträger 41 dargestellt, wie er gemäß dem Stand der Technik bekannt ist. Hierbei sind die Planetenräder 45 zwischen den Wangen 43 und 44 angeordnet, wobei die Wangen 43, 44 mittels der Planetenbolzen 47 miteinander verbunden werden. Hierbei sind die Planetenbolzen 47 fest in die Wangen 43, 44 bzw. in die Bolzenaufnahmen der Wangen 43, 44 eingepresst.

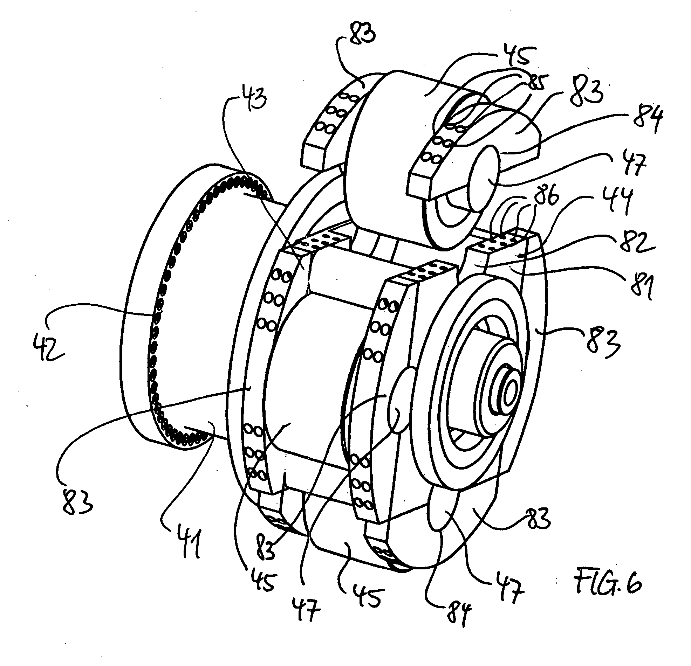

In Fig. 6 ist eine Ausbildung eines Planetenradträgers 41 in einer perspektivischen Darstellung schematisch gezeigt. Hierbei sind die hintere und vordere Wange 43, 44 mehrteilig ausgebildet, wobei die Wange 44 ein Wangeninnenteil 81 aufweist, das eine quadratische Grundfläche aufweist. Bei einer Planetenstufe mit drei Planeten oder Planetenrädern ist die Grundfläche im Wesentlichen dreieckig. Das Wangeninnenteil 81 verfügt über an jeder Seite mittig angeordnete halbkreisförmige Aufnahmen 82, so dass in der halbkreisförmigen Aufnahme 82 der Planetenbolzen 47 aufgenommen werden kann. Darüber hinaus wird die teilbare Wange 44 aus dem Wangeninnenteil 81 und vier äußeren Wangenaußenteilen 83 gebildet, die lösbar mit dem Wangeninnenteil 81 unter Verwendung von Schrauben oder Spannbolzen verbindbar bzw. verbunden sind. Jedes der Wangenaußenteile 83 verfügt über eine halbkreisförmige Aufnahme 84, so dass bei Anordnung eines Wangenaußenteils 83 an einer Seite des Wangeninnenteils 81 die Aufnahme 82 des Wangeninnenteils 81 mit der Aufnahme 84 des Wangenaußenteils 83 eine geteilte oder teilbare kreisförmige Bolzenaufnahme für den Planetenbolzen 47 bildet.

Die Wangenaußenteile 83 verfügen beidseits der halbkreisförmigen Aufnahme 84 über Bohrungen 85 zur Aufnahme von Spannelementen bzw. Spannbolzen, wobei die Spannbolzen nach Einbringen in die Bohrungen 85 und in an den Schmalseiten des Wangeninnenteils 82 ausgebildete Bohrungen 86 verspannt werden. Die Wangenaußenteile 83 sind außenseitig teilkreisförmig ausgebildet, wobei bei Anordnung am Wangeninnenteil 81 und nach Verspannen der Wangenaußenteile 83 mit dem Wangeninnenteil 81 eine scheibenförmige, kreisrunde Wange 44 ausgebildet wird, wobei im Rahmen der Erfindung auch Unterbrechungen entlang der Umfangsfläche der fertig ausgebildeten Wange 44 vorgesehen sein können.

Die Bohrungen 85 sowie die Bohrungen 86 sind zweireihig an der Außenseite der Wangenaußenteile 83 sowie des Wangeninnenteils 81 ausgebildet, wobei zum Verspannen des Wangenaußenteils 83 mit dem Wangeninnenteil 81 die Länge der Spannelemente bzw. der Spannschrauben mit zunehmendem Abstand zur Achse des Planetenbolzens 47 abnimmt. Darüber hinaus werden vorzugsweise als Schrauben oder Spannelemente Dehnbolzen verwendet, wobei insbesondere Dehnbolzen in die Bohrungen 85 eingesetzt werden, die der Achse des Planetenbolzens 47 näher liegen als die Bohrungen 85, die einen größeren Abstand zur Achse des Planetenbolzens 47 aufweisen.

Dadurch, dass die Wange 43 als auch die Wange 44 mehrteilig aus einem Wangeninnenteil und Wangenaußenteilen ausgebildet sind, ist der Planetenradträger 41 im Bereich der Achsen der Planetenbolzen 47 sowie der Bolzenaufnahmen geteilt, wobei nach Lösen der Schrauben bzw. der Verbindung zwischen dem Wangenaußenteil 83 und dem Wangeninnenteil 81 der Planetenbolzen 47 freigelegt ist, so dass der Planetenbolzen 47 zusammen mit dem Planetenrad 45 frei zugänglich ist, wodurch das Planetenrad 45 zusammen mit dem Planetenbolzen 47 radial nach außen entnommen werden kann.

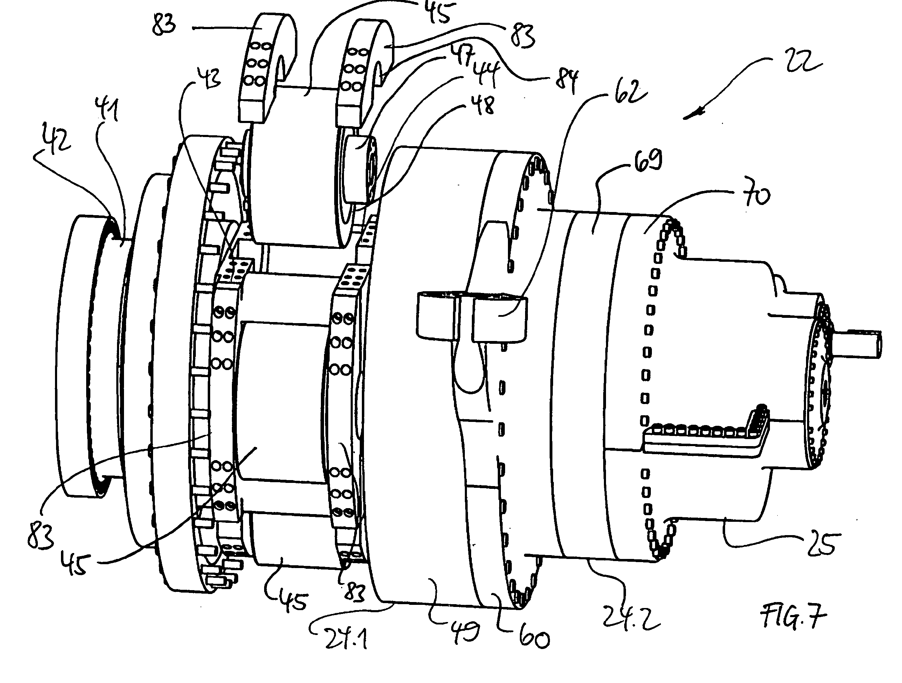

Dies ist schematisch in Fig. 7 dargestellt, wobei zur Entnahme des Planetenrads 45 das Hohlrad 49 der ersten Planetenstufe 24.1 zusammen mit dem (Rest)Gehäuse des Getriebes 22 in axialer Richtung von den vom Hohlrad 49 umgebenden Planetenrädern 45 beabstandet wird, wobei der axiale Abstand zwischen den Planetenrädern 45 und dem Hohlrad 49 bzw. dem mit dem Hohlrad 49 verbundenen Restgehäuse des Getriebes 22 so gewählt ist, dass nach Lösen der Wangenaußenteile 83 der Wangen 43 und 44 der Planetenbolzen 47 des zu entnehmenden Planetenrades 45 zur Hälfte freigelegt ist, so dass anschließend das Planetenrad 45 zusammen mit dem Planetenbolzen 47 und dem Planetenlager radial nach außen entfernt wird. Bei räumlich beengten Verhältnissen in der Gondel kann der axiale Abstand zwischen dem hinteren Ende des Planetenbolzens und dem vorderen Ende des Hohlrads nur wenige Millimeter oder nahezu Null betragen, so dass das Planetenrad und der Planetenbolzen nur knapp am vorderen Ende des Hohlrades vorbeigeführt werden können.

Vor der Entnahme des Planetenrades 45 wird dabei das entsprechend zu entnehmende Planetenrad 45 bevorzugt oberhalb des Sonnenrades 46 angeordnet und anschließend der Rotor arretiert. Anschließend werden die rotorseitige Planetenstufe 24.1 und die generatorseitige zweite Planetenstufe 24.2 voneinander getrennt, wobei die zweite Getriebestufe 24.2 zusammen mit der Stirnradstufe 25 um mindestens die Verzahnungsbreite des Planentenrads 45 vom Rotor weg axial verschoben wird, wobei das Hohlrad 49 der ersten Planetenstufe 24.1 vorteilhaft gemeinsam mit der zweiten Planetenstufe 24.2 verschoben werden kann, weil so alle Axialverschiebungen in einem Arbeitsvorgang durchgeführt werden, wodurch ein besonders schneller Austausch des Planetenrads ermöglicht wird.

Die axiale Verschiebung der zweiten Planetenstufe 24.2 zusammen mit dem Hohlrad 49 und der Stirnradstufe 25 kann dabei unter Verwendung einer voranstehend beschriebenen Handhabungseinrichtung für die Getriebestufen (vgl. Fig. 2) erfolgen.

Darüber hinaus kann in einer anderen Weiterbildung die axiale Verschiebung bzw. Verlagerung sowie axiale Beabstandung des Hohlrades 49 von den Planetenrädern 45 der ersten Planetenstufe 24.1 alternativ oder zusätzlich unter Verwendung von seitlich im Getriebe angeordneten Gleitschienen erfolgen, wobei hierbei die Drehmomentstützen 62 mit den Gleitschienen verbunden werden können. Hierbei erfolgt die axiale Beabstandung des Hohlrads 49 von den Planetenrädern 45 bevorzugt durch seitlich vom Getriebe, beispielsweise unter Abstützung der Drehmomentabstützungen des Getriebes und/oder anderer, bevorzugter Punkte des Getriebegehäuses und/oder unter Verwendung von justierbaren Gleitschienen.

Nach Lösen der Verbindung zwischen den äußeren Wangenaußenteilen 83 und des Wangeninnenteils 81 am geöffneten Getriebegehäuse werden die doppelreihigen Schrauben in den Aufnahmen 85 gelöst, wodurch die Haltekraft des Pressverbandes für den Planetenbolzen 47 in der geteilten Bolzenaufnahme reduziert wird. Anschließend erfolgt der Ausbau des Planetenrades 45 zusammen mit dem Planetenbolzen 47 als komplette Einheit in radialer Richtung nach außen, bevorzugterweise senkrecht nach oben.

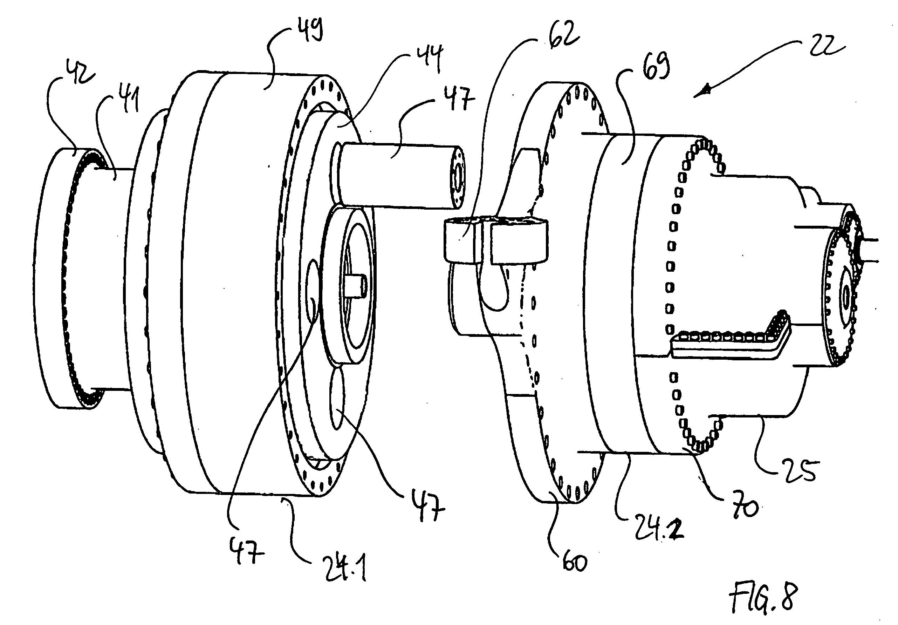

In einer anderen Ausgestaltung zur Entfernung eines Planetenrades 45 aus einer Planetenstufe eines mehrstufigen Getriebes einer Windenergieanlage ist es im Rahmen der Erfindung vorgesehen, dass vor dem Ausbau eines Planetenrads der jeweilige Planetenbolzen in axialer Richtung ausgebaut wird, bevor das entsprechende Planetenrad anschließend radial entnommen wird. Dies ist in Fig. 8 schematisch veranschaulicht.

In Fig. 8 ist schematisch ein geöffnetes Getriebe 22 dargestellt, wobei die zweite Getriebestufe 24.2 zusammen mit der Stirnradstufe 25 nach Lösen des ersten Teilungsflansches 60 von dem Hohlrad 49 der ersten Getriebestufe 24.1 axial beabstandet wird, wodurch anschließend der Planetenbolzen 47 nach Reduzierung der Haltekraft des Pressverbandes zwischen dem Planetenträger und dem Planetenbolzen 47 der Planetenbolzen 47 in axialer Richtung verlagert wird.

Die Planetenbolzen 47 sind in einer bevorzugten Ausführungsform insbesondere abschnittsweise verjüngend oder gestuft ausgeführt, d.h. dass die im Wesentlichen zylindrische Grundform der Planetenbolzen 47 an mindestens einer Stelle, bevorzugt an mehreren Stellen, eine Durchmesseränderung aufweist. Ein sich auf diese Weise axial in Richtung des Rotors bzw. der Rotorseite zugewandter verjüngender Planetenbolzen 47 ist einfacher zur Generatorseite hin, d. h. in Generatorrichtung axial zu demontieren, da das oder die Planetenräder 47 von der dem Generator zugewandten Seite zugänglich sind.

Die axiale Demontage des Planetenbolzens 47 oder der Planetenbolzen 47 wird bevorzugterweise in einer Ausgestaltung mit oder unter Verwendung einer nicht dargestellten, insbesondere hydraulisch betriebenen, Abzugsvorrichtung für die Planetenräder durchgeführt, die zwischen den Getriebestufen 24.1, 24.2 eingebracht wird. In einer bevorzugten Ausführungsform ist dabei die Abzugsvorrichtung so ausgeführt, dass sie mit einer Fernbedienung aktivierbar ist, wodurch Wartungspersonen wie z.B. Monteure in den ohnehin sehr beengten Platzverhältnissen zwischen den Getriebestufen 24.1, 24.2 einem Sicherheitsrisiko durch Aufenthalt im unmittelbaren Gefahrenbereich während des Abziehvorgangs, bei dem sehr große Kräfte wirken, nicht ausgesetzt werden, wodurch die Verletzungsgefahr für das Wartungspersonal während der Durchführung der Wartungsarbeiten herabgesetzt wird.

Hierbei wird zunächst in einem ersten Schritt das zu entnehmende Planetenrad 45 in eine bevorzugte oder vorbestimmte Position gebracht, insbesondere senkrecht oberhalb des Sonnenrades positioniert, und anschließend der Rotor arretiert. Anschließend wird die Verbindung zwischen dem Teilungsflansch 60 und dem Hohlrad 49 der ersten Planetenstufe 24.1 gelöst, wobei anschließend die erste Planetenstufe 24.1 mit dem Hohlrad 49 und die zweite Planetenstufe 24.2 in axialer Richtung voneinander beabstandet werden.

In einer Alternative wird die rotorseitige Verbindung zwischen dem Hohlrad 49 und der rotorseitigen Stirnseite des Getriebegehäuses gelöst, wobei gleichzeitig das Hohlrad 49 zusammen mit der zweiten Planetenstufe 24.2 und dem Stirnrad 25 durch axiales Verschieben von dem zu entnehmenden Planetenrad der ersten Planetenstufe 24.1 beabstandet wird.

Insbesondere werden hierbei Planetenbolzen 47 verwendet, die im Inneren Leitungen oder Kanäle aufweisen, so dass durch Einbringen von Öl an den Kontaktstellen des Planetenbolzens 47 mit den Passflächen der kreisförmigen Aufnahmen der Wangen 43, 44 die Bohrungen oder die Bolzenaufnahme durch Druckbeaufschlagungen aufgeweitet werden, wodurch nach einer Druckbeaufschlagung und Aufweitung der Bohrungen der jeweilige Planetenbolzen 47 axial verschoben wird oder ist, wodurch der Planetenbolzen 47 demontiert wird.

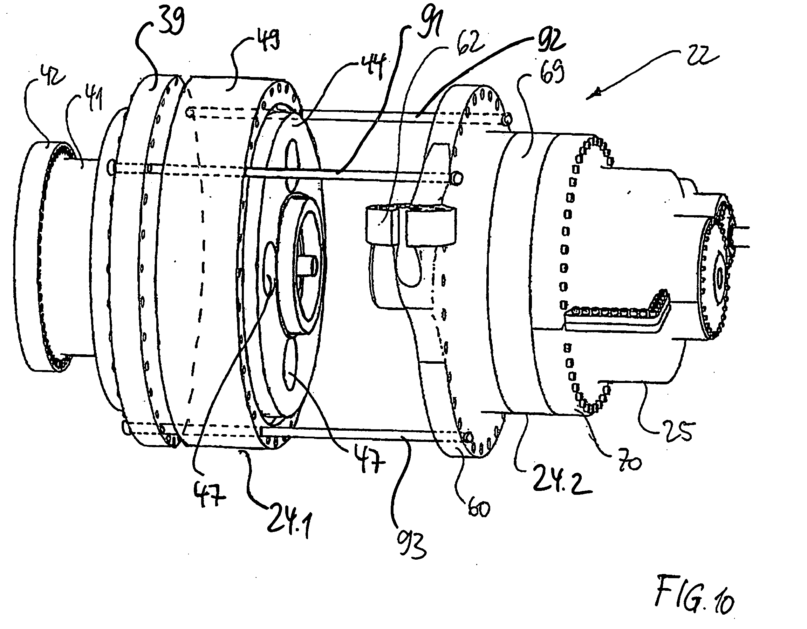

Anschließend kann gegebenenfalls nach einer noch durchzuführenden axialen Verschiebung des Hohlrades 49, wie in Fig. 8 und auch in Fig. 10 dargestellt, das Planetenrad 45 entnommen werden. Hierbei wird das Planetenrad 45 in radialer Richtung, vorzugsweise senkrecht nach oben, ausgebaut.

In Fig. 10 ist ein weiteres geöffnetes Getriebe 22 in einer perspektivischen Darstellung gezeigt, wobei nach Lösen des ersten generatorseitigen Teilungsflansches 60 von dem Hohlrad 49 der ersten Getriebestufe 24.1 das Hohlrad 49 zusammen mit dem Planetenradträger 44 und den Planetenbolzen zusammen mit den Planetenrädern von einem rotorseitigem Deckel 39 axial beabstandet wird. Um das Hohlrad 49 axial in Richtung Generator zu verschieben, werden nach Lösungen von Schraubverbindungen zwischen dem Deckel 39 und dem Hohlrad 49 sowie zwischen dem Hohlrad 49 und dem Teilungsflansch 60 in die am äußeren Umfang der Komponenten vorhandenen Schraublöcher bzw. Bohrungen oder Löcher an den Außenseiten des Deckels 39, des Hohlrades 49 und des Teilungsflansches 60 entsprechende Führungsbolzen 91, 92, 93 eingesetzt, die vorzugsweise gleichmäßig oder symmetrisch am Umfang des Deckels 39, des Hohlrades 49 und des Teilungsflansches 60 angeordnet werden. Hierbei verlaufen die Führungsbolzen 91, 92, 93 axial parallel zu den Drehachsen der Planetenräder oder des Stirnrads beispielsweise einer Stirnradstufe.

Gemäß dem Ausführungsbeispiel in Fig. 10 sind drei axial ausgerichtete Führungsbolzen 91, 92, 93 in den Durchgangslöchern am Umfang des Deckels 39 sowie des Hohlrades 49 und des Teilungsflansches 60 angeordnet. Hierbei werden die Führungsbolzen 91, 92, 93 in einer bevorzugten Ausführungsform von der Rotorseite durch die Schraublöcher des vorderen, rotorseitigen Deckels 39 des Hohlrads 49 bis in die korrespondierenden Schraublöcher des Teilungsflansches 60 geschoben und, vorzugsweise einseitig, fixiert.

Hierzu werden die vorhandenen Schraubenlöcher in den genannten Komponenten genutzt. Daher ist es insbesondere vorteilhaft, wenn in einer Ausführungsform mindestens zwei oder drei oder mehr Bohrungen in den Komponenten vorgesehen sind, die einen größeren Durchmesser aufweisen als die für die Schraubenverbindungen vorgesehenen Schraubenlöcher oder Bohrungen des Deckels 39, des Hohlrades 49 und des Teilungsflansches 60. Durch die Ausbildung von Bohrungen am Umfang der Komponenten mit größerem Durchmesser ist es einfacher, im Durchmesser starke Führungsbolzen 91, 92, 93 für die axiale Verschiebung der Getriebestufe 24.2 sowie des Hohlrades 49 der ersten Getriebestufe 24.1 vorzusehen. Das axiale Beabstanden der Komponenten bzw. die axiale Verschiebung dieser, d. h. des Teilungsflansches 60 und des Hohlrades 49, kann manuell, vorzugsweise unter Verwendung eines Spindelantriebs oder dergleichen, oder auch durch einen hydraulischen oder elektromechanisch unterstützten Antrieb erfolgen. Durch die Verwendung eines entsprechenden Antriebes ist es möglich, die axiale Verschiebung des in der Regel tonnenschweren Hohlrades 49 durchzuführen.

In einer Alternative wird anstelle der Druckbeaufschlagung durch Kanäle oder Leitungen der Planetenbolzen mit Öl ein Planetenbolzen 47 verwendet, der im Inneren Kühlmittelleitungen aufweist, so dass durch Einbringen von Kühlmittel oder einer kryogenen Flüssigkeit in die Leitungen, z.B. eine kryogene Flüssigkeit wie beispielsweise flüssiger Stickstoff der Planetenbolzen 47 in den Bolzenaufnahmen der Wangen kurzfristig abkühlt und aufgrund der Abkühlung in seinen geometrischen Abmessungen schrumpft.

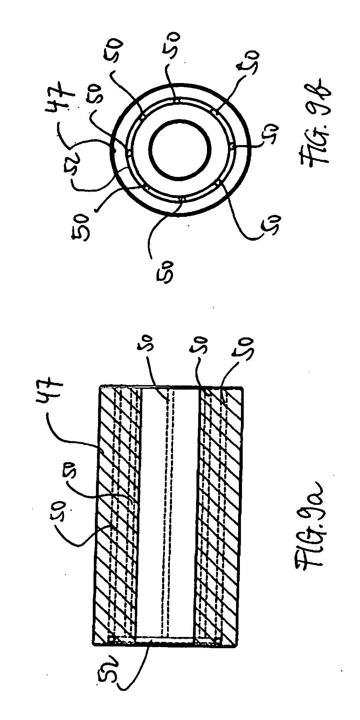

In Fig. 9a sind ein Querschnitt durch einen Planetenbolzen 47 und in Fig. 9b eine Draufsicht auf den Planetenbolzen 47 schematisch gezeigt. An der Frontseite des Planetenbolzens 47 sind frei zugängliche Bohrungen 50 ausgebildet, wobei die Bohrungen 50 parallel zur Längsachse des Planetenbolzens 47 ausgebildet sind. Endseitig sind die Bohrungen 50 über einen Kanal 52 miteinander kommunizierend verbunden. In die Bohrungen 50 wird dabei ein Abkühlmittel eingefüllt, so dass der in Bolzenaufnahmen eines Planetenträgers gehaltene Planetenbolzen schrumpft und dadurch nach Schrumpfen aus den Bolzenaufnahmen in axialer Richtung entnommen wird oder entnehmbar ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Windenergieanlage
- 11: Turm
- 12: Rotor
- 13: Rotornabe
- 14: Rotorblätter
- 15: Maschinenhaus
- 16: Rotorwelle
- 17: Lagerbock
- 18: Lagerbock
- 19: Maschinenrahmen
- 21: Rotorflansch
- 22: mehrstufiges Getriebe
- 23: Arretiervorrichtung
- 24.1: erste Planetenstufe
- 24.2: zweite Planetenstufe
- 25: Stirnradstufe
- 26: Rotorbremse
- 27: Kupplung
- 28: Generator
- 29: Schleifringeinheit
- 31: Hebevorrichtung
- 32: Traverse
- 33: Kettenzug
- 34: Befestigungsplatte
- 35: Stütze
- 36: Stütze
- 37: Querträger
- 38: Stütze
- 39: Deckel
- 41: Planetenradträger
- 42: Rotorwellenflansch
- 43: Wange
- 44: Wange
- 45: Planetenrad
- 46: Sonnenrad
- 47: Planetenbolzen
- 48: Planetenlager
- 49: Hohlrad
- 50: Bohrung
- 51: Lager
- 52: Kanal
- 55: Kabelrohr
- 60: Teilungsflansch
- 61: Planetenträger
- 62: Drehmomentstütze
- 63: Wange
- 64: Wange
- 65: Planetenrad
- 66: Sonnenrad
- 67: Planetenbolzen
- 68: Planetenlager
- 69: Hohlrad
- 70: Teilungsflansch
- 71: Lager
- 75: Stirnrad
- 76: Abtriebswelle
- 81: Wangeninnenteil
- 82: Aufnahme
- 83: Wangenaußenteil
- 84: Aufnahme
- 85: Bohrung
- 86: Bohrung
- 91, 92, 93: Führungsbolzen

## Patentansprüche

1. Verfahren zum Demontieren eines mehrstufigen Getriebes (22) einer Windenergieanlage (10), wobei das Getriebe (22) in einer auf einem Turm (11) einer Windenergieanlage (10) angeordneten Gondel (15) angeordnet ist, wobei das Getriebe (22) wenigstens eine Planetenstufe (24.1, 24.2) aufweist, wobei die wenigstens eine Planetenstufe (24.1, 24.2) einen Planetenradträger (41, 61) und mehrere im Planetenradträger (41, 61) unter Verwendung von Planetenbolzen (47, 67) gehaltene Planetenräder (45, 65) aufweist und wobei die Planetenräder (45, 65) mit einem die Planetenräder (45, 65) umgebenden Hohlrad (49, 69) der Planetenstufe (24.1, 24.2) in Wirkverbindung sind, wobei folgende Verfahrensschritte ausgeführt werden:
- das Hohlrad (49, 69) und die Planetenräder (45, 65) werden entlang einer im Wesentlichen horizontalen Achse voneinander axial beabstandet, so dass der Wirkeingriff zwischen den Planetenrädern (45, 65) und dem Hohlrad (49, 69) gelöst ist oder wird, wobei insbesondere ein oder mehrere im Planetenradträger (41, 61) gehaltene Planetenräder (45, 65) von außen zugänglich sind,
- die Halteverbindung zwischen einem Planetenrad (45, 65) und dem Planetenradträger (41, 61), vorzugsweise vor oder nach dem axialen Beabstanden vom Hohlrad (49, 69) und den Planetenrädern (45, 65), wird gelöst,
- der jeweilige Planetenbolzen (47, 67) wird vor der Entnahme des Planetenrads (45, 65) aus seiner Klemmposition in einer Klemmeinrichtung, vorzugsweise aus der Halteposition in einer Bolzenaufnahme des Planetenradträgers (41, 61), gelöst,
- und das aus der Halteverbindung mit dem Planetenradträger (45, 65) gelöste Planetenrad (45, 65) wird in radialer Richtung zur Getriebelängsachse nach außen entnommen.

2. Verfahren nach Anspruch 1, **dadurch gekennzeichnet, dass** die Halteverbindung zwischen dem Planetenrad (45, 65) und dem Planetenradträger (41, 61) dadurch gelöst wird, dass die Haltekraft der Halteverbindung, durch die ein Pressverband zwischen dem Planetenradträger (41, 61) und dem Planetenbolzen (47) ausgebildet wird, reduziert wird oder ist, und dass danach der Planetenbolzen (47) zur Entnahme des Planetenrads (45, 65) bewegt wird.

3. Verfahren nach Anspruch 1 oder 2, **dadurch gekennzeichnet, dass** der Planetenbolzen (47, 67), insbesondere nach Lösen der Klemmposition oder Halteposition, in längsaxialer Richtung oder in queraxialer Richtung bewegt wird.

4. Verfahren nach Anspruch 3, **dadurch gekennzeichnet, dass** nach Bewegung des Planetenbolzens (49, 67) in längsaxialer Richtung der Planetenbolzen (47, 67) relativ zum Planetenrad (45, 65) bewegt wird, wobei insbesondere danach in einem weiteren Verfahrensschritt das Planetenrad (45, 65) entnommen wird.

5. Verfahren nach einem der Ansprüche 1 bis 4, **dadurch gekennzeichnet, dass** vor der Entnahme des Planetenrads (45, 65) der Planetenbolzen (47, 67) unter Verwendung eines im Planetenbolzen (47, 67) ausgebildeten Kanals (50, 52) mit Öl oder mit einem Kühlmittel beaufschlagt wird, so dass durch Beaufschlagung der Kontaktstellen zwischen dem Planetenbolzen (47, 67) und dem Planetenradträger (41, 61) mit Öl die Klemmstellen des Planetenbolzens (47, 67) gelöst werden oder der Planetenbolzen (47, 67) durch Einbringen eines Abkühlmittels in die wenigstens eine Bohrung (50) des Planetenbolzens (47, 67) in seiner Klemmposition gelöst wird.

6. Verfahren nach Anspruch 3, **dadurch gekennzeichnet, dass** bei Bewegung des Planetenbolzens (47, 67) in queraxialer Richtung der Planetenbolzen (47, 67) und das Planetenrad (45, 65) gemeinsam entnommen werden.

7. Verfahren nach einem der Ansprüche 1 bis 3 oder 6, **dadurch gekennzeichnet, dass** die Halteverbindung zwischen dem Planetenrad (45, 65) und dem mit einer oder zwei Wangen (43, 44; 63, 64) ausgebildeten Planetenradträger (41, 61) dadurch gelöst wird, dass die Haltekraft der Halteverbindung, die durch eine Bolzenaufnahme in der Wange (43, 44; 63; 64) oder durch Bolzenaufnahmen in beiden Wangen (43, 44; 63, 64) für den Planetenbolzen (47, 67) ausgebildet ist, reduziert wird, wobei die Bolzenaufnahme in der Wange (43, 44; 63; 64) oder die Bolzenaufnahmen in den Wangen (43, 44; 63; 64) durch Lösen der Verbindung von zwei Wangenteilen (81, 83) der oder jeder Wange (43, 44; 63, 64), insbesondere Wangenaußenteil (83) und Wangeninnenteil (81), entlang einer in der Wange (43, 44; 63; 64) oder in den Wangen (43, 44; 63, 64) ausgebildeten Teilung geöffnet werden.

8. Verfahren nach einem der Ansprüche 1 bis 7, **dadurch gekennzeichnet, dass** bei der axialen Beabstandung des Hohlrades (49, 69) und der Planetenräder (45, 65) voneinander die Planetenräder (45, 65) gegenüber dem, vorzugsweise ortsfesten, Hohlrad (49, 69) bewegt werden oder das Hohlrad (49, 69) gegenüber den im ortsfesten Planetenradträger (41, 61) angeordneten Planetenrädern (45, 65) bewegt wird.

## Claims

1. Method for dismantling a multi-stage gear mechanism (22) of a wind power plant (10), wherein the gear mechanism (22) is arranged in a nacelle (15) arranged on a tower (11) of a wind power plant (10), wherein the gear mechanism (22) has at least one planetary stage (24.1, 24.2), wherein the at least one planetary stage (24.1, 24.2) has a planet gear carrier (41, 61) and several planet gears (45, 65) held in the planet gear carrier (41, 61) using planetary bolts (47, 67) and wherein the planet gears (45, 65) are in operative connection with a ring gear (49, 69) of the planetary stage (24.1, 24.2) surrounding the planet gears (45, 65), wherein the following method steps are performed:
- the ring gear (49, 69) and the planet gears (45, 65) are axially spaced apart from each other along a substantially horizontal axis, so that the operative engagement between the planet gears (45, 65) and the ring gear (49, 69) is or becomes loosened, wherein in particular one or several planet gears (45, 65) held in the planet gear carrier (41, 61) are accessible from the outside,
- the holding connection between a planet gear (45, 65) and the planet gear carrier (41, 61) becomes loosened, preferably before or after the axial spacing of the ring gear (49, 69) from the planet gears (45, 65),
- the respective planetary bolt (47, 67) is loosened from its clamped position in a clamp apparatus, preferably from the held position in a bolt receptacle of the planet gear carrier (41, 61), before the removal of the planet gear (45, 65),
- and the planet gear (45, 65) loosened from the holding connection with the planet gear carrier (45, 65) is removed outward, in the radial direction to the longitudinal axis of the gear mechanism.

2. Method according to claim 1, **characterized in that** the holding connection between the planet gear (45, 65) and the planet gear carrier (41, 61) is loosened **in that** the holding force of the holding connection, whereby a press fit is formed between the planet gear carrier (41, 61) and the planetary bolt (47), becomes or is reduced, and that afterward the planetary bolt (47) is moved for the removal of the planet gear (45, 65).

3. Method according to claim 1 or 2, **characterized in that**, particularly after the loosening of the clamped position or held position, the planetary bolt (47, 67) is moved in a longitudinal axial direction or a transverse axial direction.

4. Method according to claim 3, **characterized in that**, after the moving of the planetary bolt (49, 67) in a longitudinal axial direction, the planetary bolt (47, 67) is moved relative to the planet gear (45, 65), wherein in particular afterward in a further method step, the planet gear (45, 65) is removed.

5. Method according to one of claims 1 to 4, **characterized in that**, before the removal of the planet gear (45, 65), the planetary bolt (47, 67) is supplied with oil or with a coolant, using a channel (50, 52) formed in the planetary bolt (47, 67), so that, by supplying the contact points between the planetary bolt (47, 67) and the planet gear carrier (41, 61) with oil, the clamped points of the planetary bolt (47, 67) are loosened, or, by applying a coolant to the at least one drill hole (50) of the planetary bolt (47, 67), the planetary bolt (47, 67) is loosened in the clamped position thereof.

6. Method according to claim 3, **characterized in that**, by moving the planetary bolt (47, 67) in a transverse axial direction, the planetary bolt (47, 67) and the planet gear (45, 65) are removed together.

7. Method according to one of claims 1 to 3 or 6, **characterized in that** the holding connection between the planet gear (45, 65) and the planet gear carrier (41, 61) formed with one or two side plates (43, 44; 63, 64) is loosened **in that** the holding force of the holding connection, which is formed by a bolt receptacle in the side plate (43, 44; 63, 64) or by bolt receptacles in both side plates (43, 44; 63, 64) for the planetary bolt (47, 67), is reduced, wherein the bolt receptacle in the side plate (43, 44; 63, 64) or the bolt receptacles in the side plates (43, 44; 63, 64) are opened by loosening the connection of two side plate parts (81, 83) of the or each side plate (43, 44; 63, 64), particularly outer side plate part (83) and inner side plate part (81), along a separation formed in the side plate (43, 44; 63, 64) or in the side plates (43, 44; 63, 64).

8. Method according to one of claims 1 to 7, **characterized in that**, with the axial spacing of the ring gear (49, 69) and the planet gears (45, 65) from each other, the planet gears (45, 65) are moved relative to the, preferably fixed, ring gear (49, 69), or the ring gear (49, 69) is moved relative to the planet gears (45, 65) arranged in the fixed planet gear carrier (41, 61).

## Revendications

1. Procédé pour démonter une transmission à engrenages à plusieurs étages (22) d'une installation à énergie éolienne (10), dans lequel la transmission (22) est agencée dans une nacelle (15) placée sur la tour (11) d'une installation à énergie éolienne (10), la transmission (22) ayant au moins un étage planétaire (24.1, 24.2), ledit au moins un étage planétaire (24.1, 24.2) ayant un support d'engrenages planétaires (41, 61) et une pluralité d'engrenages planétaires (45, 65) maintenus par le support d'engrenages planétaires (41, 61) en utilisant des boulons planétaires (47, 67), et les engrenages planétaires (45, 65) étant en liaison fonctionnelle avec une couronne d'engrenage (49, 69) de l'étage planétaire (24.1, 24.2) entourant les engrenages planétaires (45, 65), le procédé comprenant les étapes suivantes :
- espacer axialement la couronne d'engrenage (49, 69) et les engrenages planétaires (45, 65) l'un par rapport à l'autre le long d'un axe sensiblement horizontal, de sorte que l'engagement fonctionnel entre les engrenages planétaires (45, 65) et la couronne d'engrenage (49, 69) soit ou sera libéré, un ou plusieurs engrenages planétaires (45, 65) maintenus dans le support d'engrenages planétaires (41, 61) étant en particulier accessibles de l'extérieur,
- libérer la liaison de retenue entre un engrenage planétaire (45, 65) et le support d'engrenages planétaires (41, 61), de préférence avant ou après l'espacement axial de la couronne d'engrenage (49, 69) et des engrenages planétaires (45, 65),
- libérer le boulon planétaire (47, 67) de sa position de serrage dans un dispositif de serrage avant le retrait de l'engrenage planétaire (45, 65), de préférence à partir de la position de retenue dans un logement de boulon que comprend le support d'engrenages planétaires (41, 61),
- retirer l'engrenage planétaire (45, 65) libéré de la liaison de retenue vis-à-vis du support d'engrenages planétaires (45, 65), selon une direction allant radialement vers l'extérieur par rapport à l'axe de la transmission à engrenages.

2. Procédé selon la revendication 1, **caractérisé en ce que** la liaison de retenue entre l'engrenage planétaire (45, 65) et le support d'engrenages planétaires (41, 61) est libérée de telle sorte que la force de rétention de la liaison de retenue, par laquelle un assemblage ajusté entre ledit support d'engrenages planétaires (41, 61) et le boulon planétaire (47) est formé, est réduite, et **en ce que**, par la suite, le boulon planétaire (47) est déplacé pour le retrait de l'engrenage planétaire (45, 65).

3. Procédé selon la revendication 1 ou la revendication 2, **caractérisé en ce que** le boulon planétaire (47, 67), en particulier après libération de la position de serrage ou de retenue, est déplacé dans la direction longitudinale axiale ou dans la direction transversale axiale.

4. Procédé selon la revendication 3, **caractérisé en ce qu'**après le déplacement du boulon planétaire (47, 67) dans la direction axiale longitudinale, le boulon planétaire (47, 67) est déplacé par rapport à l'engrenage planétaire (65 45), l'engrenage planétaire (45, 65) étant en particulier retiré dans une autre étape de procédé.

5. Procédé selon l'une quelconque des revendications 1 à 4, **caractérisé en ce qu'**avant le retrait de l'engrenage planétaire (45, 65), le boulon planétaire (47, 67) est alimenté en huile ou en liquide de refroidissement en utilisant un canal (50, 52) formé dans le boulon planétaire (47, 67), de sorte qu'en appliquant l'huile sous pression au niveau des points de contact entre les boulons planétaires (47, 67) et le support (41, 61) d'engrenages planétaires, les points de serrage du boulon planétaire (47, 67) sont libérés ou, par l'introduction du liquide de refroidissement dans au moins un alésage (50) du boulon planétaire (47, 67), la position de serrage du boulon planétaire (47, 67) soit libérée.

6. Procédé selon la revendication 3, **caractérisé en ce que**, par le mouvement du boulon planétaire (47, 67) dans la direction transversale axiale, le boulon planétaire (47, 67) et l'engrenage planétaire (45, 65) sont retirés en même temps.

7. Procédé selon l'une quelconque des revendications 1 à 3 ou 6, **caractérisé en ce que** la liaison de retenue entre l'engrenage planétaire (45, 65) et le support (41, 61) d'engrenage planétaire, qui présente une ou deux plaques latérales (43, 44, 63, 64), est libérée de telle sorte que la force de retenue de la liaison de retenue, qui est formée par un logement de boulon dans la plaque latérale (43, 44, 63 64) ou par des logements de boulon dans les deux plaques latérales (43, 44, 63, 64) pour le boulon planétaire (47, 67), est réduite, le logement de boulon dans la plaque latérale (43, 44 ; 63 ; 64) ou les logements de boulon dans les plaques latérales (43, 44 ; 63 ; 64) sont ouverts en libérant la connexion de deux parties (81, 83) de plaque latérale d'une ou de chaque plaque latérale (43, 44 ; 63, 64), en particulier la partie extérieure (83) de plaque latérale et la partie intérieure (81) de plaque latérale, le long d'une séparation aménagée dans la plaque latérale (43, 44 ; 63 ; 64) ou dans les plaques latérales (43, 44 ; 63, 64).

8. Procédé selon l'une quelconque des revendications 1 à 7, **caractérisé en ce que**, lors de l'écartement axial de la couronne d'engrenage (49, 69) et des engrenages planétaires (45, 65) l'un de l'autre, les engrenages planétaires (45, 65) sont déplacés par rapport à la couronne d'engrenage (49, 69), de préférence fixe, ou la couronne d'engrenage (49, 69) est déplacée par rapport aux engrenages planétaires (45, 65) qui sont disposés dans le support d'engrenages planétaires (41, 61) fixe.
